# EUROPEAN PATENT SPECIFICATION

(11) **EP 2 531 392 B1**
(45) Date of publication and mention of the grant of the patent: **25.02.2015**
(21) Application number: 11740106.7
(22) Date of filing: 20.01.2011
(51) Int. Cl.: B62D 35/00, B60S 1/66

(54) **AIR DEFLECTOR WITH VORTEX GENERATOR AND FREIGHT VEHICLE PROVIDED WITH THE AIR DEFLECTOR**
LUFTLEITBLEICH MIT WIRBELERZEUGER UND MIT DEM LUFTLEITBLECH AUSGESTATTETES FRACHTFAHRZEUG
DEFLECTEUR D'AIR AVEC GENERATEUR DE VORTEX ET VEHICULE DE TRANSPORT DE CHARGES COMPRENANT LE DEFLECTEUR D'AIR

(30) Priority: 03.02.2010 SE 1050102
(43) Date of publication of application: 12.12.2012
(73) Proprietor: Scania CV AB, 151 87 Södertälje (SE)
(72) Inventor: CONWAY, Stephen, S-141 31 Huddinge (SE); ELOFSSON, Per, S-168 60 Bromma (SE); LÖGDBERG, Ola, S-125 30 Älvsjö (SE)
(86) International application number: PCT/SE2011/050062
(87) International publication number: WO 2011/096873

(56) References cited:
- EP-A1- 1 325 860
- DE-A1- 2 726 739
- FR-A1- 2 854 120
- GB-A- 1 524 470
- US-A- 3 724 892
- US-A- 4 878 707
- US-A- 5 903 389
- US-B2- 6 899 369

## Description

### TECHNICAL FIELD

The invention relates to an air deflector at a front corner of a cab of a freight vehicle. The invention relates also to a freight vehicle provided with such an air deflector.

### BACKGROUND

The configuration of a front corner of a cab of a freight vehicle greatly affects the air resistance of the vehicle and the degree of fouling (dirtying) of the adjacent side of the cab. A known air deflector intended to prevent such fouling comprises usually a curved shield which extends round the corner in order to guide round the corner the air flow which is induced by movement of the vehicle, so that the cab side is constantly cleaned by an air flow which prevents its being contaminated by spray and dirt particles from below. An example of such an air deflector is known from US 4 878 707A1.

For it to perform its function, however, an air deflector of this type needs relatively large dimensions which increase not only the air resistance and fuel consumption but also the weight and cost of the vehicle.

### SUMMARY OF THE INVENTION

An object of the invention is therefore to propose an air deflector which, while having very small dimensions, can reduce the degree of fouling of the cab side without increasing the vehicle's air resistance.

This is achieved by the features indicated in the claims set out below.

According to a version of the invention, the air deflector comprises a vortex generator which, relative to an air flow induced round the corner by movement of the vehicle, forms an angle of incidence to convert part of the air flow to a vortex flow which follows the vehicle side adjacent to the corner and prevents fouling of that side from below.

The insight on which the invention is based is that an effective air vortex can be created by a vortex generator of small dimensions and that such an air vortex has the ability to cling or be drawn to an adjacent downstream surface. This phenomenon is utilised inter alia by aircraft wings being provided with vortex generators on their upper side to prevent premature separation of the air flow over the wing.

Although a vortex generator may be configured and oriented in many different ways within the scope of the invention, it comprises in an embodiment a substantially vertical guide vane which is connected at the top to the corner of the cab and which has a free lower end. Such a vortex generator may be arranged at the corner without any protruding sharp edges.

The guide vane may extend curvingly round the corner. In particular, the guide vane may be situated in a recess which is open outwards and which extends round the corner of the vehicle. It may also then be inset in the corner.

The recess may be located at a chassis of the vehicle, below a lower end of the cab. Such a recess is usually already available between the cab and the chassis, in which case there is no need for the cab and/or the chassis to be redesigned in order to apply an air deflector according to the invention.

An upper end of the guide vane may then also be connected firmly to the cab.

In particular, the upper end of the guide vane may be connected firmly to a corner panel of the cab. The guide vane may then be pre-connected firmly to the corner panel. Existing vehicles may then also be post-equipped with air deflectors according to the invention, by replacement of an old corner panel which may possibly have an older type of air deflector.

Other features and advantages of the invention may be indicated by the claims and the description of embodiment examples set out below.

### BRIEF DESCRIPTION OF THE DRAWINGS

FIG. 1 is a view as seen from above of a front corner of a freight vehicle provided with an air deflector according to the invention;
FIG. 2 is a front view, with portions cut away, of a front corner according to FIG. 1;
FIG. 3 is a view on a larger scale of a region provided with an air deflector in FIG. 2;
FIG. 4 depicts schematically an air deflector connected to a lower end of part of a corner panel for a freight vehicle; and
FIG. 5 is a view as seen from below of a separate air deflector according to FIG. 4.

### DETAILED DESCRIPTION OF THE AIR DEFLECTOR EXAMPLES

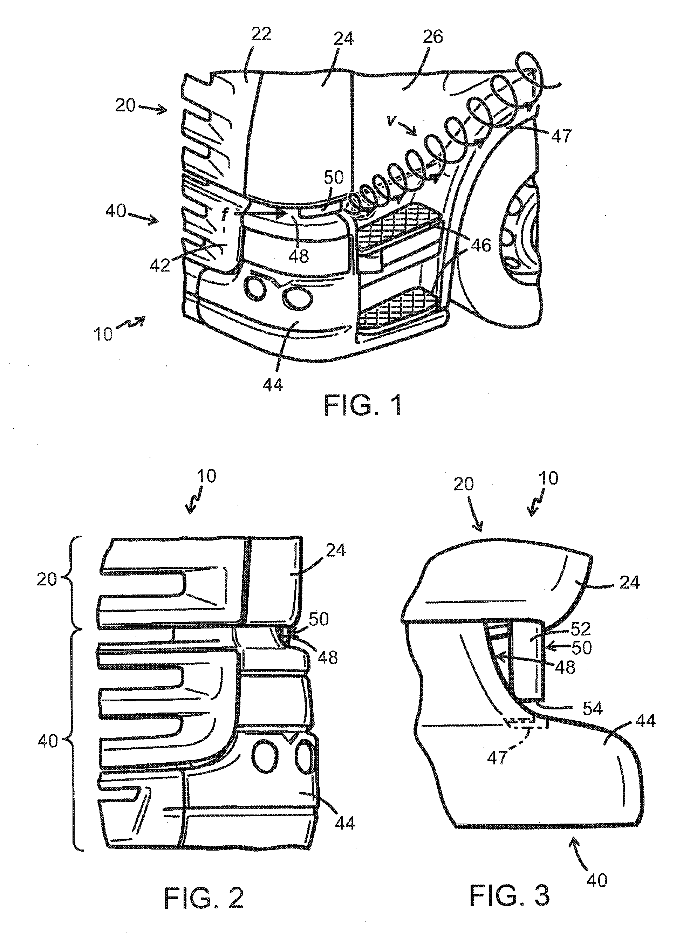

The freight vehicle 10 depicted by way of example in FIGS. 1-3 has a cab 20 which in a manner not depicted in detail is springingly suspended on a chassis 40. The front corner of the vehicle 10 takes the form of a corner panel 24 of the cab situated between an upper radiator panel 22 and a side 26 which comprises a side door of the vehicle. At the level of the chassis 40 the corner takes the form of a portion 44 of a bumper which is fitted between a lower radiator panel 42 and a pair of boarding steps 46.

In the corner region between the cab 20 and the chassis 40 there is a recess 48 which is open outwards and which extends round the corner under the whole corner panel 24 and continues along the lower edge of the door 26. The recess 48 is provided because the cab 20, which is springingly supported with overlap on the outside of the chassis 40, needs a vertical clearance for its springing movements relative to the chassis 40.

An air deflector 50 according to the invention is situated in the recess 48. Although only one cab front corner is depicted in FIGS. 1-3, there is also a corresponding mirror-image air deflector at the undepicted other cab front corner of the vehicle 10. The air deflector 50 is of the type known as vortex generator which a generally accepted definition describes as "an aerodynamic surface comprising a small blade which generates a vortex flow, i.e. a rotating, often turbulent, fluid flow". A distinguishing characteristic of such a vortex generator is that the vortex flow generated moves flowing air quickly to an otherwise separated-flow region at an adjacent downstream surface, so that this region has a turbulent vortex flow passing over it.

Although an air deflector according to the invention may have other known forms of vortex generators, the air deflector 50 according to the invention takes the form of a guide vane 52 (FIGS. 3-5). The guide vane 52 extends from top to bottom in the recess 48, curvingly round the corner, at a distance from the inside curved surface portion of the recess 48, and has a lower end 54 likewise at a distance from the lower surface portion of the recess 48.

An air flow *f* (FIG. 1) which is induced by movement of the vehicle and enters the recess 48 will meet the guide vane/air deflector 50 at an angle of incidence such that the free lower end 54 of the air deflector 50 (FIGS. 3-5) does at its rear edge convert part of the flow *f* to a vortex flow *v* (so-called tip vortex flow) of the kind described above. The flow *f* will move along the side 26 of the vehicle 10 approximately in the manner schematically depicted in FIG. 1. More specifically, in the example depicted the vortex flow *v* will substantially follow the lower portion of the side of the door 26 and may be guided upwards by the sloping surface of a mudguard 47 of the vehicle 10. The vortex flow *v* cleans the adjoining region and forms a barrier which prevents the side of the door 26 from being fouled from below by spray and other dirt particles. Any dirt particles captured by the vortex flow are conveyed on past the cab 20.

The direction of the resultant of the air flow induced by movement of the vehicle may vary but most commonly comes obliquely from in front, depending on the current direction of the air flow relative to the vehicle's direction of movement and speed. It is then the cab's leeward side which is most at risk of being fouled, whereas the windward side is kept clean by the air flow induced by movement of the vehicle. An undepicted simple planar vertical air deflector/vortex generator according to the invention might therefore also extend parallel with the vehicle's longitudinal direction in order to provide on the leeward side the necessary angle of incidence relative to the resulting vehicle-induced air flow coming from the windward side. The depicted curved configuration of the air deflector 50 may be regarded as representing a combination of a guide vane and vortex generator which may perhaps gather up more vortex-generating air flow but which in all situations need not necessarily be superior to the simple planar vortex generator. Within the scope of the invention it is at least also conceivable, as in the case of aircraft wings, to have the vortex generator, with a suitable angle of incidence relative to the air flow induced by the vehicle, extend perpendicular to the downstream surface which is to be acted upon by the vortex flow (not depicted). It is then also possible for the vortex direction of the vortex flow to be influenced by choosing the angle of incidence in one direction or the other.

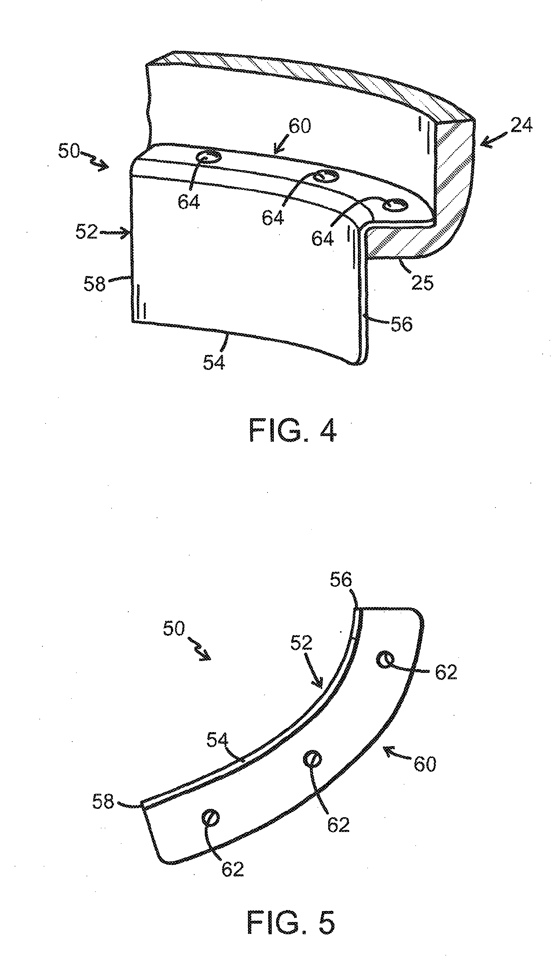

FIGS. 4 and 5 depict examples of a constructional embodiment of an air deflector 50 which may be made of, for example, suitable plastic material. The actual guide vane/ vortex generator 52 is formed integrally with an angled connecting flange 60. The flange 60 has apertures 62 (FIG. 5) for fastening elements 64 (FIG. 4) by which the air deflector 50 can be connected to a lower flange portion 25 of the corner panel 24. As indicated, at least the corner between the forward edge 56 and the lower end 54 of the guide vane 52 may be rounded. Whether the corner between the rear edge 58 and the lower end 54 may also be more or less rounded may be determined after considering to what extent this affects the vortex-generating function of the air deflector 50.

The height of the air deflector 50 in the recess is with advantage chosen such that while function is maintained there is no risk of its lower end 54 colliding with the bumper corner portion 44 (FIG. 3) during large vertical springing movements of the cab 20. If this is nevertheless unavoidable, it may be possible in some other undepicted way to have, for example, the actual guide vane/vortex generator 52 springingly connected vertically to the corner panel 24 or to a residual portion of the air deflector 50 so that the lower end may occasionally be allowed to flexibly collide gently with the bumper corner portion 44. As schematically indicated by chain-dotted lines in FIG. 3, it may also be possible to have the lower end 54 unhinderedly enter an aperture running through, or a vertical duct 47 formed in, the corner portion 44 during large springing movements of the cab 20.

The description set out above is primarily intended to facilitate comprehension and no unnecessary limitations of the invention are to be inferred therefrom. The modifications which will be obvious to one skilled in the art from perusing the description may be effected without departing from the scope of the claims set out below.

## Claims

1. An air deflector (50) at a front corner (24, 44) of a cab (20) of a freight vehicle (10), **characterised by** a vortex generator (50) which forms an angle of incidence, relative to an air flow (*f*) induced round the corner (24, 44) by movement of the vehicle, in order to convert part of the air flow (*f*) to a vortex flow (*v*) which follows a side (26) of the vehicle (10), said side being adjacent to the corner (24, 44), and prevents fouling (dirtying) of the side (26) from below, which vortex generator (50) comprises a substantially vertical guide vane (52) which is connected at the top to the corner (24) and which has a free lower end (54).

2. An air deflector according to claim 1, in which the guide vane (52) extends curvingly round the corner (24, 44).

3. An air deflector according to claim 1 or 2, in which the guide vane (52) is situated in a recess (48) which is open outwards and which extends round the corner (24, 44) of the vehicle (10).

4. An air deflector according to claim 3, in which the recess (48) is located at a chassis (40) of the vehicle, below a lower end of the cab (20).

5. An air deflector according to any one of claims 1-4, in which an upper end of the guide vane (52) is connected firmly to the cab (20).

6. An air deflector according to any one of claims 1-5, in which the upper end of the guide vane (52) is connected firmly to a corner panel (24) of the cab (20).

7. A freight vehicle (10) provided with an air deflector according to any one of the foregoing claims.

## Patentansprüche

1. Luftleitblech (50) an einem vorderen Randbereich (24, 44) einer Fahrerkabine (20) eines Frachtfahrzeugs (10), **gekennzeichnet durch** einen Wirbelerzeuger (50), welcher einen Anströmwinkel bezüglich einer Luftströmung (*f*) bildet, welche um den Randbereich (24, 44) **durch** eine Bewegung des Fahrzeugs verursacht wird, um einen Teil der Luftströmung (*f*) in eine Wirbelströmung (*v*) umzuwandeln, welche einer Seite (26) des Fahrzeugs (10) folgt, wobei die Seite an den Randbereich (24, 44) angrenzt, und welche ein Verschmutzen der Seite (26) von unten verhindert, wobei der Wirbelerzeuger (50) eine im Wesentliche senkrechte Leitschaufel (52) umfasst, welche an deren oberen Ende mit dem Randbereich (24) verbunden ist, und welche ein freies unteres Ende (54) aufweist.

2. Luftleitblech nach Anspruch 1, bei welchem sich die Leitschaufel (52) gekrümmt um den Randbereich (24, 44) erstreckt.

3. Luftleitblech nach Anspruch 1 oder 2, bei welchem die Leitschaufel (52) in einer Vertiefung (48) angeordnet ist, welche nach außen offen ist und welche sich um den Randbereich (24, 44) des Fahrzeugs (10) erstreckt.

4. Luftleitblech nach Anspruch 3, bei welchem sich die Vertiefung (48) an einem Fahrgestell (40) des Fahrzeugs unterhalb eines unteren Endes der Fahrerkabine (20) befindet.

5. Luftleitblech nach einem der Ansprüche 1 bis 4, bei welchem ein oberes Ende der Leitschaufel (52) fest mit der Fahrerkabine (20) verbunden ist.

6. Luftleitblech nach einem der Ansprüche 1 bis 5, bei welchem das obere Ende der Leitschaufel (52) fest mit einer Randverkleidung (24) der Fahrerkabine (20) verbunden ist.

7. Frachtfahrzeug (10), welches mit einem Luftleitblech nach einem der vorangehenden Ansprüche ausgestattet ist.

## Revendications

1. Déflecteur d'air (50) à un coin avant (24, 44) d'une cabine (20) d'un véhicule de fret (10), **caractérisé par** un générateur de tourbillon (50) qui forme un angle d'incidence, par rapport à un écoulement d'air (f) induit autour du coin (24, 44) par un mouvement du véhicule, de façon à convertir une partie de l'écoulement d'air (f) en un écoulement de tourbillon (v), qui suit un côté (26) du véhicule (10), ledit côté étant adjacent au coin (24, 44), et qui empêche l'encrassement (la salissure) du côté (26) à partir du dessous, ce générateur de tourbillon (50) comprenant une aube de guidage sensiblement verticale (52) qui est reliée, au sommet, au coin (24), et qui comporte une extrémité inférieure libre (54).

2. Déflecteur d'air selon la revendication 1, dans lequel l'aube de guidage (52) s'étend en courbe autour du coin (24, 44).

3. Déflecteur d'air selon la revendication 1 ou 2, dans lequel l'aube de guidage (52) est située dans une cavité (48) qui est ouverte vers l'extérieur et qui s'étend autour du coin (24, 44) du véhicule (10).

4. Déflecteur d'air selon la revendication 3, dans lequel la cavité (48) est disposée au niveau d'un châssis (40) du véhicule, en dessous d'une extrémité inférieure de la cabine (20).

5. Déflecteur d'air selon l'une quelconque des revendications 1 à 4, dans lequel une extrémité supérieure de l'aube de guidage (52) est fermement reliée à la cabine (20).

6. Déflecteur d'air selon l'une quelconque des revendications 1 à 5, dans lequel l'extrémité supérieure de l'aube de guidage (52) est fermement reliée à un panneau de coin (24) de la cabine (20).

7. Véhicule de fret (10) muni d'un déflecteur d'air selon l'une quelconque des revendications précédentes.
